# FASCICULE DE BREVET EUROPEEN

(11) **EP 2 781 817 B1**
(45) Date de publication et mention de la délivrance du brevet: **20.01.2016**
(21) Numéro de dépôt: 14161106.1
(22) Date de dépôt: 21.03.2014
(51) Int. Cl.: F16L 19/02, F16L 37/18

(54) **Dispositif de raccord, et raccord comprenant un tel dispositif**
Anschlussvorrichtung und Anschluss, der eine solche Vorrichtung umfasst
Connector device and connector comprising such a device

(30) Priorité: 22.03.2013 FR 1352581
(43) Date de publication de la demande: 24.09.2014
(73) Titulaire: STÄUBLI FAVERGES, 74210 Faverges (FR)
(72) Inventeur: Tiberghien, Alain-Christophe, 74230 SEVRIER (FR); Durieux, Christophe, 73200 GILLY SUR ISERE (FR); Bahno, Igor, 73400 UGINE (FR)
(74) Mandataire: Myon, Gérard Jean-Pierre

(56) Documents cités:
- US-A- 559 911
- US-A- 3 425 717
- US-A- 5 350 200

## Description

La présente invention concerne un dispositif de raccord. L'invention concerne également un raccord comprenant un tel dispositif.

Le domaine de l'invention est celui des connecteurs adaptés au passage de fluides sous hautes pressions et hautes ou très basses températures, qui exigent une sécurité maximale et imposent une étanchéité par pièces métalliques. Avantageusement, une telle étanchéité est réalisée par contact métal sur métal, sans utiliser de joint en matériau polymère. L'invention est bien adaptée aux applications particulières dans le domaine de la cryogénie.

GB-A-163 053 décrit un dispositif de raccord entre deux tubes. Un premier tube est vissé dans un élément principal de couplage muni d'une première surface tronconique. Le second tube est vissé dans une bague de couplage munie d'une deuxième surface tronconique et montée coulissante dans l'élément principal. Le dispositif comprend également un levier à came, monté sur l'élément de couplage après insertion du deuxième tube dans la bague. L'actionnement du levier à came permet le rapprochement des deux surfaces tronconiques puis l'application d'une pression de contact, réalisant ainsi une étanchéité tronc de cône sur tronc de cône au sein du dispositif. En pratique, cette étanchéité nécessite d'exercer des efforts élevés du levier à came sur les surfaces de contact. Les contacts entre la came portée par le levier et la bague à déplacer sont des contacts linéiques, ce qui pose un problème de compacité et/ou de résistance lorsque les matériaux, notamment pour des raisons de compatibilité avec certains fluides, ne présentent pas une dureté suffisante pour résister au matage.

US-A-5 350 200 décrit un autre dispositif de raccord entre deux tubes, munis de surfaces tronconiques complémentaires. Le dispositif de raccord comprend deux bagues annulaires, comportant chacune une cavité de réception de l'un des tubes. Les bagues annulaires comportent en outre des filetages et taraudages complémentaires. Le vissage des bagues annulaires permet le rapprochement des deux surfaces puis l'application d'une pression de contact, réalisant ainsi une étanchéité tronc de cône sur tronc de sphère au sein du dispositif, selon le préambule de la revendication 1.

A titre d'exemple non limitatif, les applications très basses températures peuvent mettre en oeuvre des aciers inoxydables austénitiques, par exemple de type 316L, présentant une forte ténacité sous des températures cryogéniques mais une faible dureté.

Le but de la présente invention est de proposer un dispositif de raccord amélioré, en particulier pour les applications hautes températures ou très basses températures.

A cet effet, l'invention a pour objet un dispositif de raccord adapté pour transmettre des fluides sous pression. Ce dispositif de raccord est configuré pour s'accoupler avec un élément de raccord complémentaire, avec une première pièce parmi le dispositif et l'élément de raccord qui est configurée comme un élément mâle adapté pour être relié à une première canalisation et une deuxième pièce parmi le dispositif et l'élément de raccord qui est configurée comme un élément femelle adapté pour être relié à une deuxième canalisation. Ce dispositif de raccord comprend :
- un conduit d'embout délimitant un canal interne d'écoulement d'un fluide dans le dispositif de raccord et comportant une surface d'appui pour l'élément de raccord ;
- un corps d'embout comportant une surface filetée d'engagement avec un corps de l'élément de raccord et une cavité intérieure qui s'étend globalement suivant un axe longitudinal du dispositif de raccord et qui est isolée du canal interne d'écoulement du fluide en configuration accouplée ; et
- des moyens de déplacement du conduit d'embout dans la cavité du corps d'embout le long de l'axe longitudinal selon une direction avant entre une configuration déverrouillée et une configuration verrouillée.

Ce dispositif de raccord est caractérisé en ce que ces moyens de déplacement comprennent au moins un organe pivot, un organe excentrique, un organe bielle et un logement arrière qui est ménagé dans le corps d'embout, définissant :
- un premier diamètre d'articulation entre l'organe pivot et l'organe excentrique autour d'un premier axe,
- un deuxième diamètre d'articulation entre l'organe excentrique et l'organe bielle autour d'un deuxième axe, et
- un troisième diamètre d'articulation entre l'organe bielle et le logement arrière autour d'un troisième axe ;
en ce que les premier, deuxième et troisième axes sont distincts et parallèles à une direction transversale à l'axe longitudinal ;
en ce que la distance entre le premier axe et le deuxième axe est inférieure à la demi-somme du premier diamètre et du deuxième diamètre ;
en ce que la distance entre le deuxième axe et le troisième axe est inférieure à la demi-somme du deuxième diamètre et du troisième diamètre ; et
en ce que l'organe pivot est mobile uniquement en translation suivant l'axe longitudinal par rapport au corps d'embout et est apte à repousser le conduit d'embout suivant la direction.

Ainsi, le dispositif de raccord selon l'invention présente de nombreux avantages, qui ressortiront de la description ci-après. En particulier, le dispositif de raccord permet d'obtenir une connexion fiable et ergonomique entre deux éléments de raccord, en mettant en oeuvre des moyens de déplacement procurant des pressions de contact réduites et une compacité importante.

Selon d'autres caractéristiques avantageuses du dispositif de raccord selon l'invention, prises isolément ou en combinaison :
- L'organe excentrique comprend une première surface cylindrique qui coopère avec l'organe pivot pour former l'articulation de premier diamètre et une deuxième surface cylindrique qui coopère avec l'organe bielle pour former l'articulation de deuxième diamètre, et la première surface cylindrique entoure ou est entourée par la deuxième surface cylindrique de l'organe excentrique.
- L'organe bielle comprend une première surface cylindrique qui coopère avec l'organe excentrique pour former l'articulation de deuxième diamètre et une surface externe incluant une deuxième surface cylindrique qui coopère avec le logement arrière pour former l'articulation de troisième diamètre, et la surface externe de l'organe bielle entoure la première surface cylindrique de l'organe bielle.
- Le logement arrière, la première surface cylindrique et la deuxième surface cylindrique de l'organe bielle, la première surface cylindrique et la deuxième surface cylindrique de l'organe excentrique sont disposés au même niveau selon une direction parallèle aux premier, deuxième et troisième axes.
- Le premier axe et le troisième axe sont situés dans un plan sensiblement parallèle à l'axe longitudinal du dispositif de raccord, le deuxième axe est situé d'un côté du plan dans la configuration déverrouillée des moyens de déplacement, et le deuxième axe est situé de l'autre côté du plan dans la configuration verrouillée des moyens de déplacement.
- La distance entre le premier axe et le deuxième axe est inférieure à la distance entre le deuxième axe et le troisième axe.
- L'organe pivot comprend au moins une partie cylindrique centrée sur le premier axe ; l'organe excentrique comprend un alésage recevant la partie cylindrique de l'organe pivot pour former l'articulation de premier diamètre et une surface externe entourant l'alésage et centrée sur le deuxième axe ; l'organe bielle comprend un alésage recevant la surface externe de l'organe excentrique pour former l'articulation de deuxième diamètre et une surface externe entourant l'alésage ; et le logement arrière est formé d'un alésage centré sur le troisième axe et apte à coopérer avec une surface cylindrique de la surface externe de l'organe bielle pour former l'articulation de troisième diamètre.
- L'organe excentrique forme un levier de manoeuvre des moyens de déplacement entre la configuration déverrouillée et la configuration verrouillée et comprend deux bras de levier situés de part et d'autre du corps d'embout, chaque bras de levier coopérant avec l'organe pivot ; et les moyens de déplacement comprennent deux organes bielles coopérant chacun avec l'un des bras de levier de l'organe excentrique, et deux logements arrière débouchant à l'extérieur du corps d'embout et coopérant chacun avec l'un des organes bielles.
- Les deux bras de levier sont reliés par un arbre formant une poignée de manoeuvre, qui vient en butée contre le corps d'embout dans la configuration verrouillée, des moyens de déplacement.
- L'organe excentrique comporte au moins une butée venant en appui contre une surface de l'organe bielle dans la configuration déverrouillée des moyens de déplacement.
- Le dispositif de raccord comprend des moyens de rappel élastique des moyens de déplacement en configuration déverrouillée.

L'invention a également pour objet un raccord adapté pour transmettre des fluides sous pression. Ce raccord est caractérisé en ce qu'il comprend un dispositif de raccord tel que mentionné ci-dessus, ainsi qu'un élément de raccord complémentaire qui est apte à être couplé au dispositif de raccord et qui comprend un conduit définissant une surface d'appui complémentaire de la surface d'appui du dispositif de raccord, et en ce que la surface d'appui de l'élément de raccord complémentaire et la surface d'appui du dispositif de raccord sont en contact tronc de cône sur tronc de cône ou en contact portion de sphère sur tronc de cône pour former la liaison étanche entre le conduit d'embout et le conduit.

Selon une variante avantageuse du raccord mentionné ci-dessus, l'élément de raccord complémentaire comprend un mécanisme de verrouillage mobile entre, d'une part, une position de blocage du conduit de l'élément de raccord complémentaire introduit dans un corps de l'élément de raccord complémentaire par rapport audit corps de l'élément de raccord complémentaire, selon au moins une direction parallèle à un axe longitudinal de l'élément de raccord complémentaire et opposée au dispositif de raccord et, d'autre part, une position où le mécanisme de verrouillage autorise le retrait du conduit de l'élément de raccord hors du corps de l'élément de raccord complémentaire.

L'invention sera mieux comprise à la lecture de la description qui va suivre, donnée uniquement à titre d'exemple non limitatif et faite en référence aux dessins annexés sur lesquels :
- la figure 1 est une vue de côté d'un raccord conforme à l'invention, comprenant un dispositif de raccord femelle et un embout de raccord mâle montrés dans une configuration désaccouplée, le dispositif étant également conforme à l'invention, un levier appartenant au dispositif étant partiellement représenté en position déverrouillée ;
- la figure 2 est une coupe axiale du raccord montré à la figure 1 ;
- la figure 3 est une coupe axiale partielle du raccord dans un plan perpendiculaire au plan de la figure 2, à plus grande échelle, montrant le raccord en cours d'accouplement, avec le levier en position déverrouillée ;
- la figure 4 est une vue partielle de côté dans un plan analogue à la figure 1, à plus grande échelle, montrant le raccord dans une configuration accouplée, avec le, levier en position verrouillée ;
- la figure 5 est une coupe axiale partielle selon la ligne V-V à la figure 4, dans un plan analogue à la figure 3 mais à plus petite échelle ;
- la figure 6 est une vue en perspective partielle éclatée, à une autre échelle, du dispositif de raccord des figures 1 à 5 ;
- la figure 7 est une vue à plus grande échelle du détail VII à la figure 1, montrant partiellement le dispositif de raccord dans la configuration désaccouplée ; et
- la figure 8 est une vue à plus grande échelle du détail VIII à la figure 4, dans un plan analogue à la figure 7, montrant le dispositif de raccord dans la configuration accouplée.
- la figure 9 est une représentation schématique, à plus grande échelle, d'un mécanisme de genouillère de l'état de l'art en configuration déverrouillée; et
- la figure 10 est une représentation schématique, à plus grande échelle, d'un mécanisme de genouillère de l'état de l'art en configuration verrouillée.

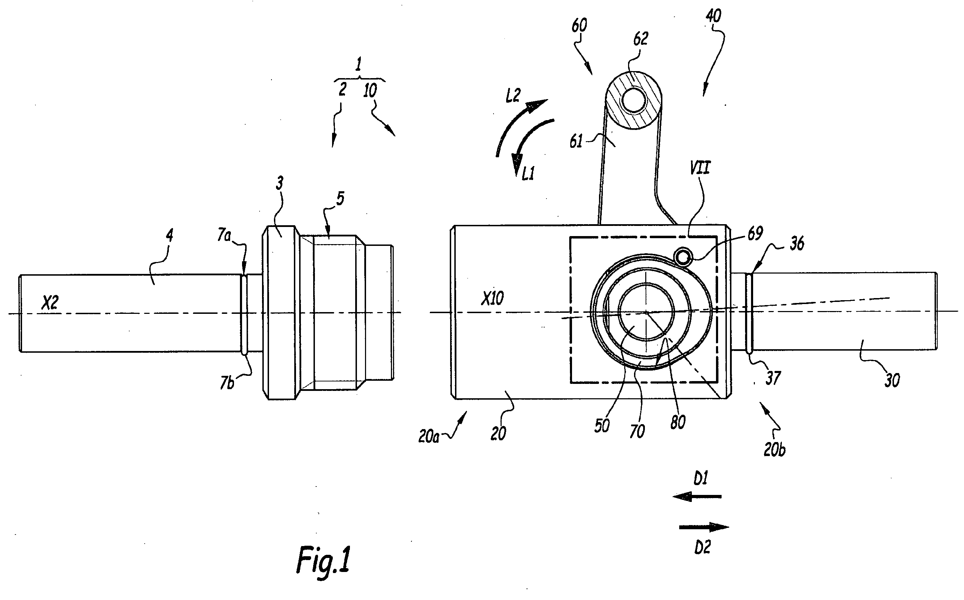

Sur les figures 1 à 8 est représenté un raccord 1 conforme à l'invention.

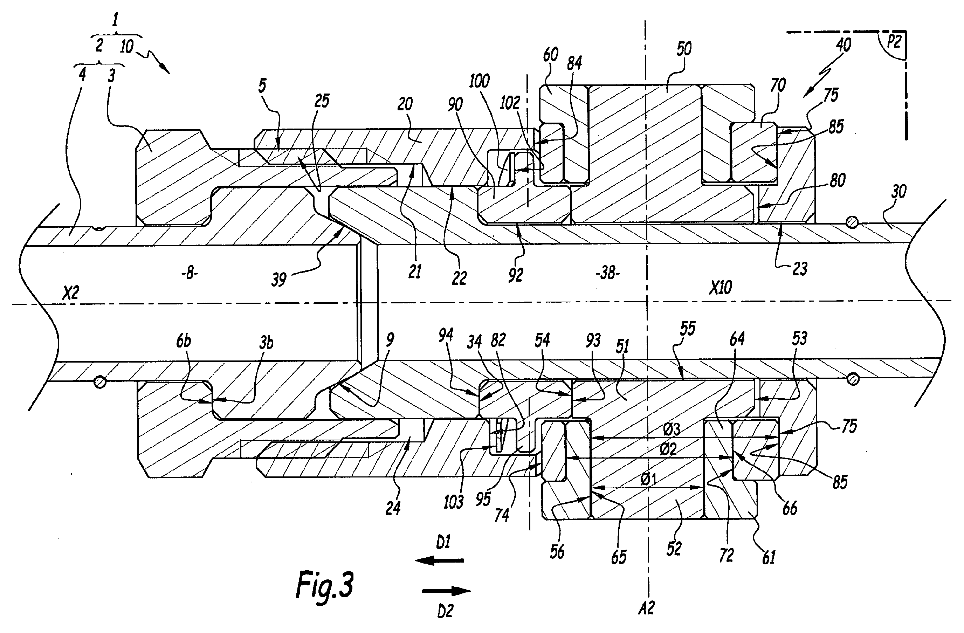

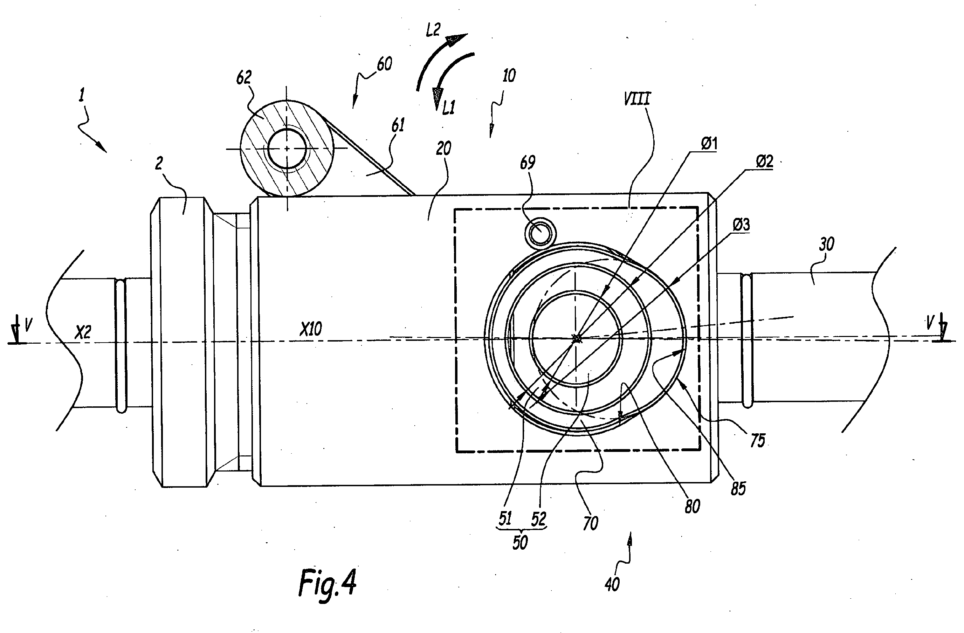

Ce raccord 1 comprend un élément de raccord 2 et un dispositif de raccord 10, qui est également conforme à l'invention. L'élément 2 est conformé comme un embout de raccord mâle, tandis que le dispositif 10 est conformé comme un embout de raccord femelle, adapté pour recevoir l'élément 2. Le dispositif 10 est prévu pour être relié à une première canalisation, tandis que l'élément 2 est prévu pour être couplé au dispositif de raccord 10 et être relié à une deuxième canalisation, ces canalisations n'étant pas représentés sur les figures 1 à 8 dans un but de simplification. Le raccord 1 est montré dans une configuration désaccouplée aux figures 1, 2 et 7, en cours d'accouplement à la figure 3 et dans une configuration accouplée aux figures 4, 5 et 8.

L'élément 2 et le dispositif 10 sont les deux éléments constitutifs du raccord 1, adaptés pour transmettre des fluides gazeux et/ou liquides à hautes pressions et hautes températures (jusqu'à 450°C) ou très basses températures (par exemple jusqu'à -250°C) lorsque le raccord 1 est en configuration accouplée. Dans ce cas, le dispositif 10 est relié à la première canalisation, tandis que l'élément 2 est couplé au dispositif de raccord 10 et relié à la deuxième canalisation, de sorte qu'un fluide peut traverser le raccord 1 d'une canalisation à l'autre. Les éléments constitutifs 2 et 10 du raccord 1 sont en métal, afin de résister aux hautes pressions et aux hautes températures ou très basses températures. A titre d'exemple non limitatif, les applications très basses ou très hautes températures peuvent mettre en oeuvre des aciers inoxydables austénitiques, par exemple de type 316L.

Comme montré aux figures 1 à 5, l'élément de raccord 2 comprend un corps 3 et un conduit 4 globalement centrés sur un axe longitudinal X2. Le corps 3 définit un côté avant de l'élément 2, tandis que le conduit 4 s'étend vers l'arrière de l'élément 2.

Le corps 3 comporte une cavité intérieure 3a, une surface annulaire 3b et un alésage intérieur 3c. La surface annulaire 3b s'étend radialement à l'axe X2 entre la cavité 3a et l'alésage 3c, qui sont centrés sur l'axe X2. La surface 3b est orientée du côté avant de l'élément 2. Le corps 3 comporte également un filetage périphérique externe 5, formant un profil de prise complémentaire d'un profil de prise 25 formé sur le dispositif 10, comme détaillé ci-après.

Le conduit 4 comprend une tête 6 disposée dans la cavité 3a du corps 3, ainsi qu'un tube 7 qui s'étend vers l'arrière depuis la tête 6 à travers l'alésage 3c. Le conduit 4 est traversé par un canal interne 8 qui s'étend suivant l'axe X2 entre une embouchure avant 8a et une embouchure arrière 8b. L'embouchure avant 8a du canal 8 débouche au niveau de la tête 6 et est prévue pour être couplée au dispositif 10. L'embouchure arrière 8b du canal 8 débouche du tube 7 à l'opposé de la tête 6 et est reliée à la canalisation non représentée. La tête 6 comporte une surface cylindrique externe 6a centrée sur l'axe X2, ainsi qu'une surface annulaire arrière 6b qui s'étend radialement à l'axe X2. La surface 6a est reçue dans la cavité 3a, tandis que la surface 6b est prévue pour venir en butée contre la surface 3a du corps 3. Une rainure 7a recevant un circlips 7b de forme globalement annulaire est ménagée dans le tube 7, en débouchant au niveau de sa surface externe. Le circlips 7b ne forme pas un anneau complet afin de faciliter son introduction dans la rainure 7a. Lorsque le conduit 4 est mobile par rapport au corps 3 le long de l'axe X2, le tube 7 est mobile dans l'alésage 3c, tandis que la surface 6a est mobile dans la cavité 3a. Le déplacement du conduit 4 vers l'avant est limité par la présence du circlips 7b, tandis que le déplacement du conduit 4 vers l'arrière est limité par la présence de la surface 3b recevant la surface 6b en butée. Le corps 3 est monté avec possibilité de rotation autour de l'axe X2 par rapport au conduit 4.

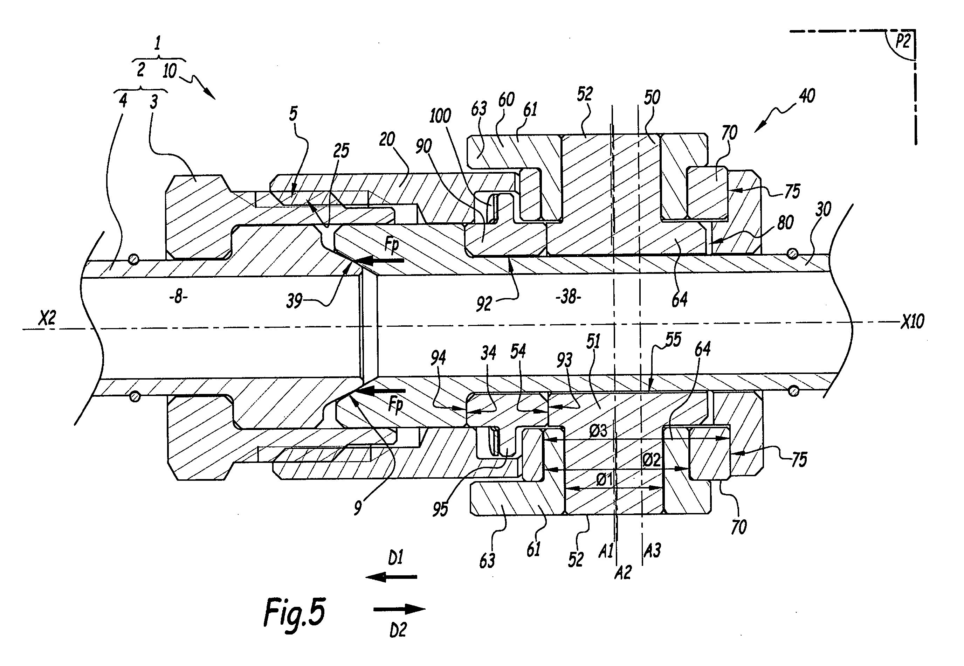

La tête 6 comporte également une surface 9, en portion de sphère centrée sur l'axe X2, orientée vers l'avant et l'extérieur de l'élément 2. La surface sphérique 9 se resserre en s'éloignant du tube 7. La surface sphérique 9 constitue une partie d'appui pour une surface tronconique 39 complémentaire appartenant au dispositif 10, comme montré aux figures 3 et 5. Une telle étanchéité sphérique/tronconique par contact métal sur métal est bien adaptée aux fluides à hautes pressions et hautes températures ou très basses températures. D'autre part, l'étanchéité portion de sphère sur tronc de cône ne requiert pas de joint, d'où une maintenance allégée.

Le dispositif de raccord 10 s'étend globalement suivant un axe central longitudinal X10, qui est aligné avec l'axe X2 de l'élément de raccord 2 lorsque le raccord 1 est en configuration accouplée. Le dispositif de raccord 10 comprend un corps d'embout taraudé 20, un conduit d'embout 30 mobile par rapport au corps 20, ainsi qu'un mécanisme 40 de déplacement du conduit 30 par rapport au corps 20 suivant la direction longitudinale définie par l'axe X10. Le conduit 30 est traversé, le long de l'axe X10, par un canal principal 38 d'écoulement de fluide dans le dispositif 10. Dans la configuration accouplée du raccord 1 montrée à la figure 5, le canal 8 et le canal 38 sont raccordés de manière étanche, autorisant ainsi l'écoulement de fluide dans le raccord 1.

Le corps d'embout taraudé 20 présente une forme globalement tubulaire. Le corps 20 s'étend suivant l'axe X10 entre une extrémité avant 20a d'accouplement à l'élément 2 et une extrémité arrière 20b de coulissement du conduit 30 suivant l'axe X10. Le corps 20 comprend un premier alésage 21 situé du côté de l'extrémité 20a, un deuxième alésage 22 intermédiaire et un troisième alésage 23 situé du côté de l'extrémité 20b. Les alésages 21, 22, 23 sont centrés sur l'axe X10. Le diamètre de l'alésage 21 est supérieur au diamètre de l'alésage 22, qui est supérieur au diamètre de l'alésage 23, ces diamètres étant mesurés autour de l'axe X10. Entre les alésages 22 et 23 est ménagé un logement 80, débouchant de part et d'autre du corps 20, comme détaillé ci-après. Les alésages 21, 22, 23 et le logement 80 délimitent une cavité intérieure 24 dite sèche, dans le sens où cette cavité 24 est isolée du canal 38 d'écoulement du fluide en circulation dans le dispositif 10. Cette cavité 24 traverse le corps 20 de part en part selon l'axe longitudinal X10, entre les extrémités 20a et 20b. Le conduit 30 peut se translater suivant l'axe X10 par rapport au corps d'embout 20, en étant guidé dans les alésages 22 et 23.

Le corps 20 comprend un profil de prise 25, qui est plus précisément un filetage intérieur, c'est-à-dire un taraudage, ménagé autour de l'axe X10 au niveau de la surface du premier alésage 21 du côté de l'extrémité 20a. Le profil de prise 25 formé sur le corps 20 est complémentaire du profil de prise 5 formé sur le corps 3 de l'élément 2, en vue de l'accouplement de l'élément 2 et du dispositif 10 formant le raccord 1.

Le logement 80 ménagé dans le corps 20 est prévu pour recevoir les différents éléments constitutifs du mécanisme 40. Le logement 80 comporte un premier alésage 81 centré sur l'axe X10, un épaulement 82 qui s'étend radialement à l'axe X10 entre l'alésage 81 et l'alésage 22, deux portions 83 de surface intérieure tronconique centrée sur l'axe X10, un deuxième alésage 84 ménagé suivant une direction radiale à l'axe X10 au niveau de l'alésage 81 et des portions 83 et débouchant de part et d'autre du corps 20, ainsi que deux logements arrières latéraux 85 formés suivant une direction radiale à l'axe X10 par des alésages de profil partiellement cylindrique. Chaque alésage 85 débouche, d'une part, à l'extérieur du corps 20 et, d'autre part, dans le corps 20 au niveau de l'alésage 84. Les alésages 85 sont tous deux centrés sur un axe A3 qui est perpendiculaire à l'axe X10 et qui est décalé de l'axe de l'alésage 84 le long de l'axe X10.

On définit pour le corps d'embout 20 une direction avant D1, parallèle à l'axe X10 et dirigée depuis l'extrémité arrière 20b vers l'extrémité avant 20a, ainsi qu'une direction arrière D2 orientée en sens contraire à la direction D1.

Le conduit d'embout 30 comprend une tête 31 prévue pour connexion au conduit 4 de l'élément 2 et un tube arrière 32 relié à la canalisation non représentée. La tête 31 et le tube 32 présentent chacun une forme tubulaire centrée sur l'axe X10. La tête 31 comporte une surface cylindrique externe 33 centrée sur l'axe X10, ainsi qu'un épaulement arrière 34 de forme globalement annulaire qui s'étend radialement à l'axe X10 entre la surface 33 et le tube 32. Le tube 32 dépasse du côté arrière 20b du corps 20 au niveau de l'alésage 23. Autrement dit, le conduit 30 est partiellement logé dans le corps 20, sans être entouré du fluide en circulation dans le canal 38. Le tube 32 comporte une surface cylindrique externe 35 centrée sur l'axe X10, de diamètre inférieur à celui de la surface 33 de la tête 31. Une rainure 36 recevant un circlips 37 de forme annulaire est ménagée dans le tube 32, en débouchant au niveau de la surface 35. Le circlips 37 ne forme pas un anneau complet afin de faciliter son introduction dans la rainure 36. Lorsque le conduit 30 est mobile par rapport au corps 20 le long de l'axe X10, suivant l'une des directions D1 ou D2, la surface 33 est mobile dans l'alésage 22, tandis que la surface 35 est mobile dans l'alésage 23. Le déplacement du conduit 30 suivant la direction D1 est limité par la présence du circlips 37, tandis que le déplacement du conduit 30 suivant la direction D2 est limité par la présence du mécanisme 40.

Le conduit d'embout 30 est traversé par le canal interne 38 qui s'étend suivant l'axe X10 entre une embouchure avant 38a et une embouchure arrière 38b. Le canal 38 délimite le canal d'écoulement de fluide dans le dispositif de raccord 10. L'embouchure avant 38a du canal 38 débouche au niveau de la tête 31 et est prévue pour être couplée à l'élément 2. L'embouchure arrière 38b du canal 38 débouche du tube 32 à l'opposé de la tête 31 et est reliée à la canalisation non représentée. La surface tronconique 39 est ménagée à l'embouchure avant 38a du canal 38, à l'intérieur et à l'avant de la tête 31. La surface tronconique 39 est évasée dans la direction D1 opposée au tube 32, formant ainsi une partie d'appui complémentaire de la surface 9 de l'élément 2.

En pratique, aucun fluide ne s'écoule dans la cavité intérieure sèche 24 du corps 20 et sur les surfaces externes 33, 34 et 35 du conduit 30. Le canal 38 est isolé de la cavité intérieure sèche 24 lorsque le dispositif 10 est en configuration accouplée avec l'élément complémentaire 2. Autrement dit, le conduit 30 est différent d'une soupape.

Comme montré aux figures 3 à 8, le mécanisme 40 de déplacement du conduit 30 dans le corps 20 comprend un organe pivot 50, un levier excentrique 60, deux bagues bielles 70, un logement 80 ménagé dans le corps 20, une rondelle 90 et un ressort 100.

L'organe pivot 50 est disposé dans le corps 20 et entoure le conduit 30. Plus précisément, l'organe pivot 50 est logé en partie dans le logement 80 et débouche de part et d'autre de ce logement 80 au niveau des alésages 85. L'organe pivot 50 comprend une partie centrale 51 encadrée par deux parties latérales 52 de forme cylindrique. La partie centrale 51 comporte une surface externe 53 formant une portion cylindrique et une surface plane avant 54, perpendiculaire à l'axe X10, qui sont traversées par un alésage 55. Le tube 32 du conduit 30 traverse à jeu réduit cet alésage 55 le long de l'axe X10. Chaque partie latérale 52 comporte une surface externe cylindrique 56 coaxiale avec la surface 53. Les parties latérales 52 sont montées dans le levier 60, comme détaillé ci-après. Les parties latérales 52 et leurs surfaces cylindriques 56 sont centrées sur un axe A1. La surface plane avant 54 est en contact avec la rondelle 90, elle-même en appui contre la surface 34 du conduit 30 dans une configuration reculée du conduit 30. La surface plane avant 54 est apte à repousser le conduit 30 dans la direction avant D1. Les contacts entre les éléments 50, 90 et 30 sont des contacts de surface, dits surfaciques.

Le levier excentrique 60 est mobile en rotation autour de l'axe A1 par actionnement de l'opérateur, d'une part, dans un sens de verrouillage L1 en direction d'une position verrouillée et, d'autre part, dans un sens de déverrouillage L2 opposé au sens L1 en direction d'une position déverrouillée. Le levier 60 comprend deux bras de levier 61 reliés par une poignée 62. La poignée 62 est formée par un arbre cylindrique qui s'étend entre les bras 61 suivant une direction transverse à l'axe central X10. Dans un but de simplification, sur les figures 1 et 4, l'un des bras 61 n'est pas représenté tandis que la poignée 62 est montrée en coupe.

Chaque bras de levier 61 comporte une partie allongée 63 et une partie cylindrique excentrique 64, solidaires l'une de l'autre. La partie allongée 63 est située du côté extérieur du dispositif 10, tandis que la partie excentrique 64 est située du côté intérieur de la partie allongée 63 par rapport à l'axe central X10. La partie allongée 63 est située hors du logement 80, tandis que la partie excentrique 64 pénètre dans l'alésage 85 du logement 80. Le bras 61 est traversé, à la fois dans sa partie allongée 63 et sa partie excentrique 64, par un alésage 65 centré sur l'axe A1. L'alésage 65 est prévu pour recevoir l'une des parties latérales de l'organe pivot 50, de sorte que la surface 56 et l'alésage 65 pivotent l'un par rapport à l'autre autour de l'axe A1. La partie excentrique 64 comporte une surface cylindrique externe 66 centrée sur un axe A2 parallèle mais décalé par rapport à l'axe A1. Autrement dit, l'alésage 65 et la surface cylindrique 66 sont excentrés. La surface cylindrique 66 entoure complètement l'alésage 65 et en particulier est disposée au même niveau que l'alésage 65 selon une direction transversale parallèle aux axes A1, A2 et A3, c'est-à-dire dans la même région le long de cette direction transversale. Autrement dit, un plan perpendiculaire à cette direction transversale coupe l'alésage 65 et la surface cylindrique 66. Chaque partie excentrique 64 du levier 60 est montée dans une bague bielle 70, comme détaillé ci-après. La partie allongée 63 comporte un orifice 67 ménagé à l'opposé de la partie excentrique 64 et de l'alésage 65 le long de cette partie allongée 63. La poignée 62 est fixée à chacune de ses extrémités à l'un des bras 61 par une vis 68 traversant l'orifice 67. La fixation par vis 68 permet de maintenir le levier excentrique 60 et les bagues bielles 70 montées autour de l'organe pivot 50.

Chaque bras de levier 61 comporte également un pion 69 de forme cylindrique, positionné du côté intérieur du levier 60, à côté de la partie excentrique 64. Chaque pion 69 est prévu pour coopérer avec l'une des bagues bielles 70, comme détaillé ci-après. Le pion 69 montré aux figures 1, 4, 7 et 8 appartient à un bras 61 non représenté dans un but de simplification.

Les bagues bielles 70 sont montées sur les parties excentriques 64 du levier 60. Chaque bague bielle 70 est logée avec jeu dans l'alésage 84 et dans l'un des alésages 85 du logement 80 ménagé dans le corps 20. Chaque bague bielle 70 comporte un alésage interne 72, ainsi qu'une surface externe 73 comprenant une surface externe avant 74 et une surface externe arrière 75 reliées par deux surfaces planes 76. L'alésage 72 et la surface 74 sont centrés sur l'axe A2. Les surfaces 74 et 75 forment des portions de cylindre, avec la surface 75 qui présente un diamètre inférieur à la surface 74. L'alésage 72 est prévu pour pivoter autour de la surface 66 de la partie excentrique 64. La surface 75 est excentrée par rapport à l'axe A2 et est prévue pour glisser dans l'alésage 85 du logement 80 autour de l'axe A3. Chaque bague bielle 70 est mobile en rotation, d'une part, par rapport à la partie excentrique 64, autour de la surface cylindrique 66 et de l'axe A2 et, d'autre part, par rapport au corps d'embout 20, autour de l'axe A3 fixe par rapport au logement 80 lorsque la surface de glissement 75 est en contact avec l'alésage 85. La surface externe 73 de la bague bielle 70, formée des surfaces 74, 75 et 76, est disposée autour de l'alésage 72. En particulier, la surface externe arrière 75 est disposée au même niveau que l'alésage 72 selon une direction transversale parallèle aux axes A1, A2 et A3, c'est-à-dire dans la même région le long de cette direction transversale. Autrement dit, un plan perpendiculaire à cette direction transversale coupe l'alésage 72 et la surface arrière 75. La surface arrière 75 dans son prolongement autour de l'axe A3 est sécante avec la surface cylindrique formée par l'alésage 72 et en variante non représentée, entoure complètement la surface cylindrique formée par l'alésage 72.

La rondelle 90 est disposée dans le logement 80 et comprend une partie principale 91 globalement tubulaire, qui est traversée par un alésage cylindrique 92 centré sur l'axe X10. La partie 91 s'étend suivant l'axe X10 entre deux surfaces d'extrémité 93 et 94 globalement annulaires, qui s'étendent radialement à l'axe X10. L'alésage 92 est traversé par le tube 32 du conduit 30. La surface 93 est orientée vers l'arrière du dispositif 10 et disposée en appui contre la surface 54 de l'organe pivot 50. La surface 94 est orientée vers l'avant du dispositif 10 et disposée en appui contre la surface 34 du conduit 30. La rondelle 90 comprend également une collerette 95 qui s'étend radialement à l'axe X10 depuis une surface extérieure de la partie 91, sensiblement à mi-chemin entre les surfaces 93 et 94. La collerette 95 est située en regard de l'alésage 81 du logement 80 radialement à l'axe X10. Sur deux côtés de la rondelle 90 diamétralement opposés par rapport à l'axe X10, la partie 91, les surfaces 93 et 94 et la collerette 95 sont tronquées par deux surfaces planes 96. Les surfaces 96 sont parallèles entre elles et à l'axe X10.

Le ressort 100 est disposé dans le logement 80, sur la rondelle 90. Le ressort 100 présente une forme globalement annulaire centrée sur l'axe X10. Le ressort 100 comporte un orifice intérieur 101, un côté arrière 102 et un côté avant 103. L'orifice 101 est prévu pour recevoir la partie principale 91 de la rondelle. Le ressort 100 est positionné sur la rondelle 90, du côté de la collerette 95 qui est plus rapproché de la surface 94 que de la surface 93. Le côté arrière 102 est disposé au contact de la collerette 95. Le côté avant 103 est disposé au contact de la surface 82 du logement 80 ménagé dans le corps d'embout 20.

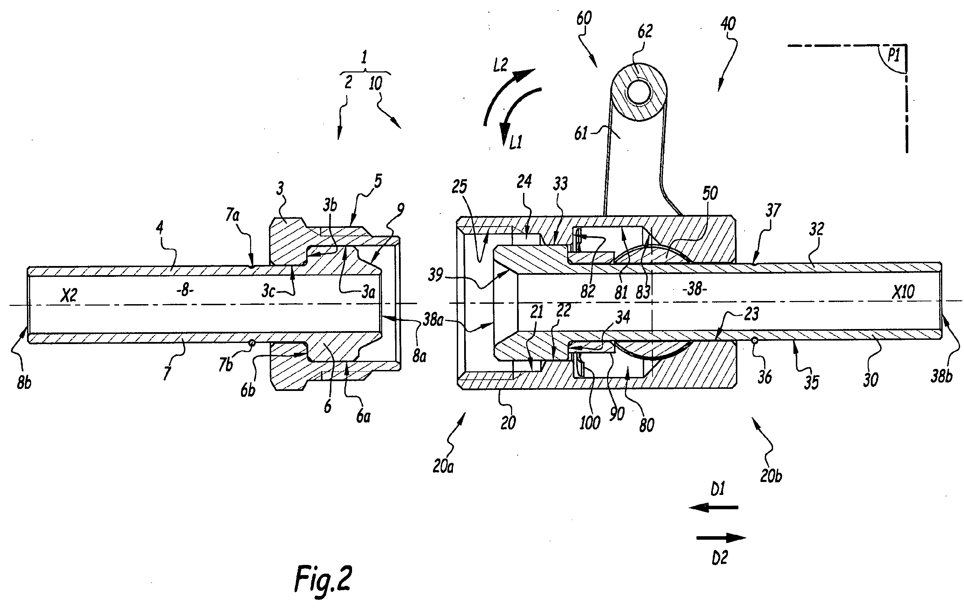

L'axe de rotation A1 entre l'organe pivot 50 et le levier excentrique 60, l'axe de rotation A2 entre le levier excentrique 60 et les bagues bielles 70 et l'axe de rotation A3 entre les bagues bielles 70 et le corps 20 sont distincts, c'est-à-dire non alignés. Les axes A1, A2 et A3 sont sensiblement parallèles entre eux et parallèles à une direction transversale du dispositif 10, c'est-à-dire perpendiculaires à un plan P1 incluant l'axe central X10. En l'occurrence, les axes A1, A2, et A3 s'étendent selon une direction perpendiculaire au plan P1 incluant l'axe X10. Ce plan P1 constitue un plan de symétrie du dispositif 10, excepté au niveau du taraudage 25. Les axes A1 et A3 sont situés sensiblement dans un même plan P2 perpendiculaire au plan de symétrie P1. Sur l'exemple des figures, le plan P2 inclut l'axe central X10. En alternative, le plan P2 peut être parallèle à l'axe X10. Le plan P1 correspond au plan de la figure 2, tandis que le plan P2 correspondant au plan des figures 3 et 5.

En pratique, entre la configuration déverrouillée et la configuration verrouillée du mécanisme 40, l'axe A1 est mobile dans le plan P2 le long de l'axe X10, tandis que l'axe A3 est fixe. Pour sa part, l'axe A2 est mobile de part et d'autre du plan P2, par pivotement du levier excentrique 60 à la fois autour de l'axe mobile A1 et autour de l'axe fixe A3 entre la configuration déverrouillée et la configuration verrouillée. L'axe A2 est situé globalement entre les axes A1 et A3 suivant la direction longitudinale définie par l'axe X10. La distance entre les axes A1 et A2 est constante et correspond à l'excentration des surfaces 65 et 66. De même, la distance entre les axes A2 et A3 est constante et correspond à l'excentration des surfaces 72 et 75. La distance entre les axes A1 et A2 est inférieure, de l'ordre de 10 fois, préférentiellement d'au moins 5 fois, à la distance entre l'axe A2 et l'axe A3. Suivant la direction longitudinale du dispositif 10 définie par l'axe X10, la distance entre les axes A1 et A3 est inférieure dans la configuration déverrouillée par rapport à la configuration verrouillée du mécanisme 40. Lorsque l'opérateur fait pivoter le levier 60 dans le sens L1, de la position déverrouillée à la position verrouillée, l'axe A2 traverse le plan P2 et le mécanisme 40 se trouve dans sa configuration verrouillée, dite irréversible. Cette irréversibilité empêche un retour accidentel de l'axe A2 vers sa position initiale. En configuration déverrouillée, l'axe A2 est situé d'un côté du plan P2. En configuration verrouillée, l'axe A2 est situé de l'autre côté du plan P2 et est plus rapproché de ce plan P2 que dans la configuration déverrouillée.

En alternative, le mécanisme 40 peut être configuré tel que l'axe A2 est mobile uniquement d'un côté du plan P2, par pivotement du levier excentrique 60 à la fois autour de l'axe mobile A1 et autour de l'axe fixe A3. Dans ce cas, le mécanisme 40 ne présente pas d'irréversibilité. Afin que le mécanisme 40 puisse être maintenu dans sa configuration verrouillée lorsque le levier 60 en position verrouillée, le dispositif 10 peut être équipé de moyens de blocage en position verrouillée de ce levier 60 et/ou d'un autre élément mobile constitutif du mécanisme 40.

Selon l'invention, les éléments constitutifs du mécanisme 40 définissent un premier diamètre Φ1 d'articulation entre l'organe pivot 50 et le levier excentrique 60 autour du premier axe A1, un deuxième diamètre Φ2 d'articulation entre le levier excentrique 60 et les bagues bielles 70 autour du deuxième axe A2, et un troisième diamètre Φ3 d'articulation entre l'organe bielle 70 et le logement arrière 85 autour du troisième axe A3. Les diamètres Φ1, Φ2 et Φ3 sont représentés aux figures 3 à 5 et 7.

Pour le mécanisme 40 des figures 1 à 8, le diamètre Φ1 est égal à 5 mm, le diamètre Φ2 est égal à 7,5 mm, le diamètre Φ3 est égal à 8,5 mm. La demi-somme des diamètres Φ1 et Φ2 vaut donc 6,25 mm. La demi-somme des diamètres Φ2 et Φ3 vaut donc 8 mm. La distance entre l'axe A1 et l'axe A2 est égale à 0,15 mm et la distance entre l'axe A2 et l'axe A3 est égale à 1,5 mm.

Le fonctionnement complet du raccord 1 et du dispositif 10 est détaillé ci-après.

Comme montré aux figures 1, 2 et 7, le raccord 1 est initialement en configuration désaccouplée, c'est-à-dire que l'élément de raccord 2 et le dispositif de raccord 10 sont désaccouplés. Le levier excentrique 60 est en position déverrouillée, avec les bras 61 qui s'étendent de part et d'autre du corps 20 suivant une direction globalement perpendiculaire à l'axe X1 et au plan P2.

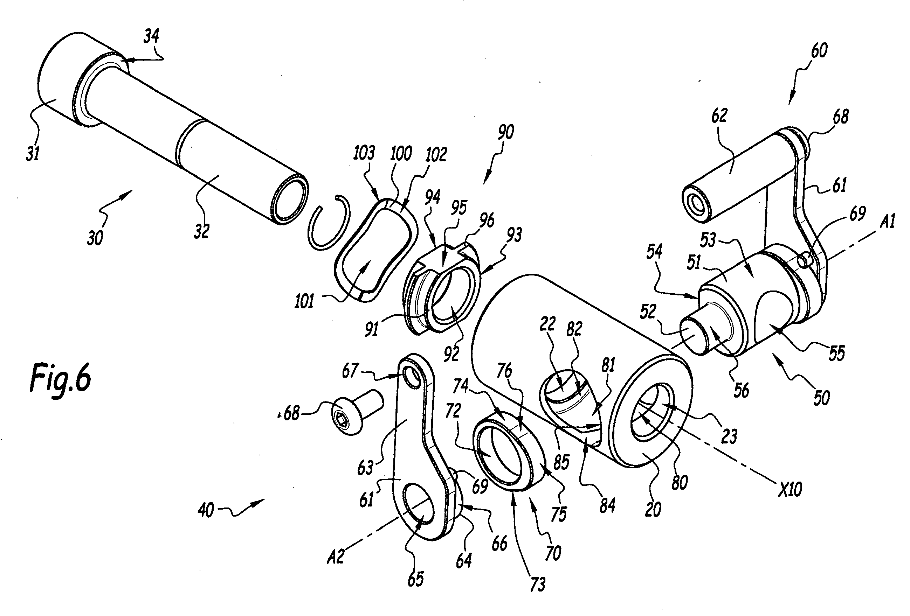

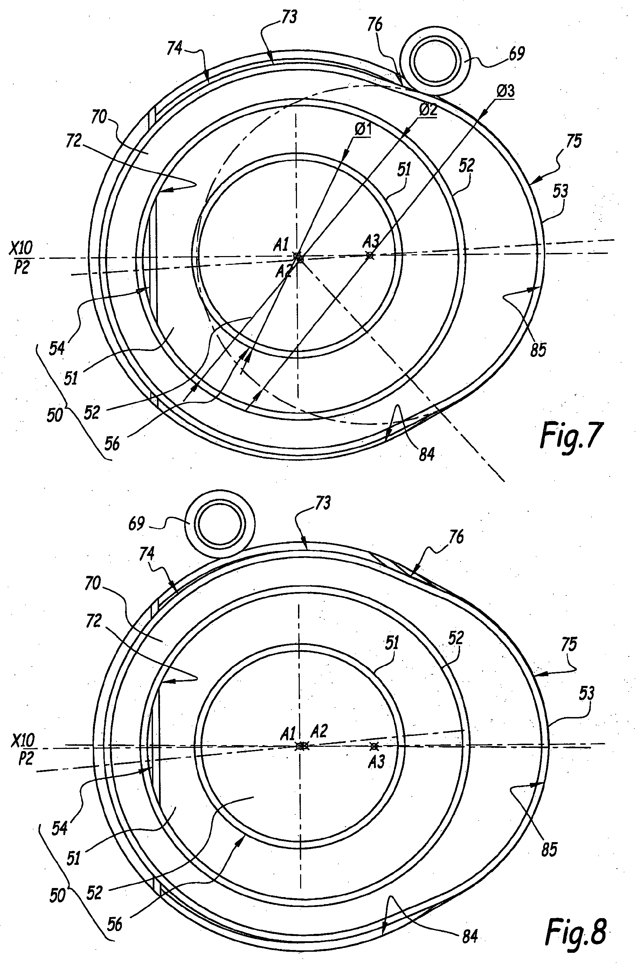

Comme montré en particulier aux figures 6 et 7, lorsque le dispositif 10 est assemblé et que le levier 60 est en position déverrouillée, chaque pion 69 porté par le levier 60 est en appui sur l'une des surfaces planes 76 des bagues bielles 70. Cette coopération entre le pion 69 et la bague bielle 70 limite la position angulaire du levier 60 autour de l'axe A1, autrement dit empêche la rotation du levier 60 autour de l'axe A1 dans le sens de déverrouillage L2. Le levier 60 est rappelé dans cette position par le ressort 100, qui repousse suivant la direction arrière D2 la rondelle 90, l'organe pivot 50, le levier excentrique 60 et les bagues bielles 70 en butée arrière sur le corps 20. En particulier, chaque surface arrière 75 est en butée arrière selon l'axe X10 dans l'alésage 85 correspondant.

Comme montré à la figure 3, lors d'une première phase d'accouplement entre l'élément 2 et le dispositif 10, le levier 60 est encore en position déverrouillée. Chaque pion 69 coopère avec la surface plane 76 de l'une des bagues bielles 70. L'élément 2 complémentaire du dispositif 10 est vissé dans le corps 20, plus précisément le filetage 5 est vissé dans le taraudage 25, jusqu'à mettre en contact les surfaces 9 et 39 et repousser la surface 34 du conduit 30 en butée contre la surface 94 de la rondelle 90, tandis que la surface 6b du conduit 4 est repoussée en butée contre la surface 3b du corps 3 de l'élément 2. Le corps 3 de l'élément 2 pénètre dans la cavité 24 du corps 20, la tête 31 du conduit 30 pénètre dans la cavité 3a du corps 3 et l'embouchure 8a du conduit 4 pénètre dans l'embouchure 38a du conduit 30. Les corps 3 et 20 sont alors solidaires en translation selon l'axe X10.

Comme montré aux figures 4, 5 et 8, le levier excentrique 60 est ensuite actionné pour amener le raccord 1 en configuration accouplée. Le levier 60 est déplacé de sa position déverrouillée à sa position verrouillée en pivotant dans le sens de verrouillage L1, avec la poignée 62 qui se rapproche de l'avant 20a du corps 20. Autrement dit, le levier 60 est déplacé de la configuration déverrouillée à la configuration verrouillée du mécanisme de déplacement 40. Le levier 60 pivote autour de l'axe A1 dans le sens L1 d'un angle égal à environ 50°, ce pivotement étant limité par la venue en butée de la poignée 62 sur le corps 20. La rotation du levier 60 par rapport à l'organe pivot 50 se produit autour de l'axe A1 par coopération de la surface externe 56 avec l'alésage 65, ces surfaces définissant le diamètre Φ1 d'articulation. La rotation du levier 60 provoque également la rotation de la partie excentrique 66 par rapport à la bague bielle 70 autour de l'axe A2 par coopération de l'alésage 72 avec la surface externe 66, ces surfaces définissant le diamètre Φ2 d'articulation. La bague bielle 70 subit alors une rotation par rapport au corps d'embout 20 autour de l'axe A3 par la coopération de la surface externe arrière 75 avec l'alésage 85, ces surfaces définissant le diamètre Φ3 d'articulation. L'axe A2 traverse alors le plan P2 comprenant les axes A1 et A3 et l'axe X10, entre l'axe A1 et l'axe A3, pénétrant ainsi dans une zone d'irréversibilité du verrouillage, ce qui garantit le maintien du mécanisme 40 en configuration verrouillée. Le mouvement de l'axe A2 entre la configuration déverrouillée et la configuration verrouillée provoque le déplacement de l'axe A1, et donc du conduit d'embout 30 par rapport au corps 20, suivant la direction avant D1 selon l'axe X10. A titre d'exemple pour un dispositif 10 de dimensions usuelles, la distance entre les axes A1 et A3 a augmenté de l'ordre de 0.05 mm, c'est-à-dire que la surface 54 d'appui du pivot 50 sur la rondelle 90, et donc la surface 94 d'appui de la rondelle 90 sur le conduit 30, se sont déplacées de 0.05 mm vers le côté avant 20a du corps 20 lors de la rotation du levier 60. Ce déplacement permet de rapprocher le conduit 30 et l'élément 2 complémentaire, de manière à créer des efforts de pression Fp de la surface 9 sur la surface 39, formant ainsi une liaison étanche entre les canaux 8 et 38 au niveau de ces surfaces 9 et 39 complémentaires. Les efforts de pression Fp sont représentés schématiquement par des flèches à la figure 5. En réaction aux efforts de pressions Fp, la surface 39 exerce de même des efforts de pression sur la surface 9, non représentés dans un but de simplification. Le raccord 1 en configuration accouplée est étanche à l'interface entre l'élément 2 et le dispositif 10, de sorte que le fluide peut circuler à travers le raccord 1.

A la déconnexion, c'est-à-dire pour passer de la configuration accouplée à la configuration désaccouplée du raccord 1, le levier 60 est actionné en rotation autour de l'axe A1 dans le sens de déverrouillage L2, avec la poignée 62 qui s'éloigne de l'avant 20a du corps 20. L'axe A2 est également déplacé en sens contraire, vers sa position initiale, en traversant de nouveau le plan P2 pour quitter la zone d'irréversibilité. Chaque pion 69 vient limiter la rotation du levier 60 en coopérant avec la surface plane 76 de la bague bielle 70 correspondante. L'axe A1 se déplace selon la direction arrière D2 et les efforts de pression Fp exercés par la surface 9 sur la surface 39 sont relâchés, l'étanchéité au sein du raccord 1 n'est plus assurée. En dévissant la tête 3 par rapport au corps 20, on désolidarise l'élément 2 et le dispositif 10.

En variante non représentée, les surfaces 56, 65, 66, 72, 75 et 85 peuvent être décalées selon une direction transversale parallèle aux axes A1, A2, A3. En projection sur le plan P1 perpendiculaire aux axes A1, A2 et A3, les surfaces 66 et 72 entourent les surfaces 65 et 56 tandis que la surface externe 73 de la bague bielle 70 entoure les surfaces 66 et 72.

Selon une autre variante non représentée, en projection sur le plan P1, les surfaces 66 et 65 de la partie excentrique 64 ne s'entourent pas mais sont sécantes, c'est-à-dire l'une des surfaces 66 ou 65 est contenue partiellement dans l'autre surface 66 ou 65.

De manière avantageuse dans le cadre de l'invention, le mécanisme 40 présente un encombrement réduit suivant la direction longitudinale car, au contraire d'une genouillère traditionnelle où les articulations sont juxtaposées, les articulations du mécanisme 40 selon les axes A1, A2 et A3 sont imbriquées. Les surfaces 56 ou 65 et 66 sont sécantes ou la surface 56 ou la surface 65 entoure ou est entourée par la surface 66. Les surfaces 75 et 72 sont sécantes ou la surface 75 entoure la surface 72. Autrement dit, la distance entre les axes A1 et A2 est strictement inférieure à la demi-somme des premier et deuxième diamètres d'articulation Φ1 et Φ2 et la distance entre les axes A2 et A3 est strictement inférieure à la demi-somme des deuxième et troisième diamètres d'articulation Φ2 et Φ3 Préférentiellement, les axes A1, A2 et A3 sont tous trois disposés à l'intérieur de toutes les surfaces cylindriques d'articulation 56, 65, 66, 72, 75, 85 du mécanisme 40, les surfaces d'articulation 66 et 72 entre le levier excentrique 60 et la bague bielle entourent les surfaces d'articulation 56 et 65 entre l'organe pivot 50 et le levier excentrique 60, ce qui assure une compacité longitudinale maximale selon l'axe X10. Du fait de cette imbrication, les interfaces de contact cylindriques ou en portions de cylindre entre les éléments 50, 60, 70 et 80 en rotation relative sont relativement importantes et permettent d'atteindre une faible valeur de déplacement de l'axe A1 entre la configuration déverrouillée et la configuration verrouillée. En outre, les interfaces de contacts surfaciques planes entre les pièces 50, 90 et 30 en translation sont relativement importantes. L'augmentation des interfaces de contact entre les pièces du dispositif 10 permet de réduire les pressions de contact pour un effort d'actionnement constant, ce qui permet l'utilisation de matériaux moins durs, et donc plus économiques ou plus spécifiquement adaptés à certaines applications, notamment en cryogénie. La construction avec l'axe A2 disposé d'un côté du plan P2 en configuration déverrouillée et disposé de l'autre côté du plan P2 en configuration verrouillée permet l'auto-maintien du mécanisme 40 en configuration verrouillée et le verrouillage avec un moindre effort dès lors que la position de point mort (axes A1, A2, A3 contenus dans le plan P2) est dépassée. Le parallélisme du plan P2 comprenant les axes A1 et A3 avec l'axe central longitudinal X10 du dispositif 10 autorise une course optimale pour un effort donné de verrouillage. Une excentration entre l'axe A2 et l'axe A3 supérieure à l'excentration entre l'axe A1 et l'axe A2 permet la manoeuvre du mécanisme 40 par le levier excentrique 60, et également de limiter l'ouverture du corps 20 par le logement 80 en limitant la rotation de la bague bielle 70 entre la configuration déverrouillée et la configuration verrouillée. Le mécanisme 40 présente un encombrement réduit à l'extérieur du corps d'embout 20 car les pièces 50, 60, 70 sont toutes au moins partiellement disposées à l'intérieur, c'est-à-dire du côté de l'axe X10, par rapport à la surface externe du corps d'embout 20. Les surfaces 56, 66, 75 et les alésages 65, 72 et 85 sont en outre toutes disposées, au moins partiellement, au même niveau dans une direction transversale parallèle aux axes A1, A2 et A3, ce qui permet de construire des pièces 60, 70 simples et d'atteindre un encombrement réduit suivant la direction radiale. La manoeuvre de la poignée 62 du levier 60, éloignée de l'axe A1, permet à un opérateur d'exercer un effort de verrouillage important. Le contrôle de la course du levier 60 par deux butées 62 et 69 en fin de course garantit une valeur de déplacement du conduit 30 maîtrisée et reproductible. Dans toutes les configurations du mécanisme 40, chacun des alésages arrières 85 est disposé en arrière des axes A1, A2 et A3 selon l'axe longitudinal X10.

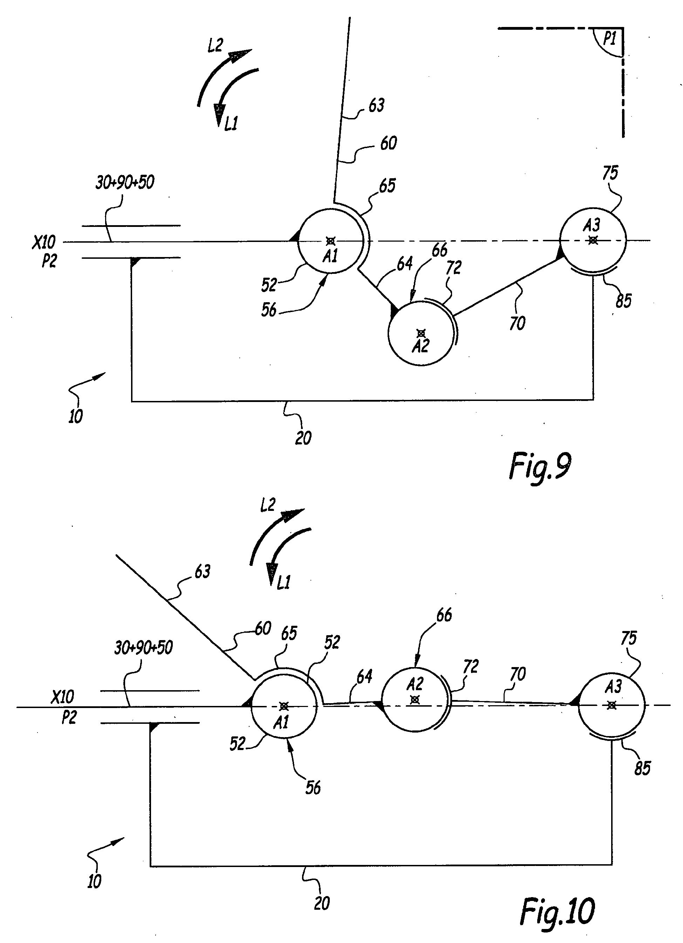

Les figures 9 et 10 représentent cinématiquement et schématiquement les éléments constitutifs du dispositif 10, dans un agencement correspondant à une genouillère de l'état de l'art, non conforme à l'invention.

Par ailleurs, le raccord 1, l'élément de raccord 2 et le dispositif de raccord 10 peuvent être conformés différemment des figures 1 à 8 sans sortir du cadre de l'invention.

En variante non représentée, les parties d'appui 9 et 39 entre l'élément 2 et le conduit d'embout 30 peuvent être conformées différemment de l'exemple des figures 1 à 8. De préférence, les parties 9 et 39 comprennent au moins une surface tronconique pour former un contact direct étanche. Par exemple, les parties 9 et 39 comprennent toutes deux une surface tronconique. Selon un autre exemple, les parties 9 et 39 peuvent être configurées avec l'élément 2 qui est femelle et reçoit un conduit d'embout mâle 30. De préférence, lorsque le contact étanche des parties 9 et 39 est du type tronc de cône / sphère, la pièce externe femelle est munie d'une extrémité tronconique et la pièce interne mâle est munie d'une extrémité partiellement sphérique.

Selon une autre variante non représentée, l'étanchéité au sein du raccord 1 est assurée par un joint métallique. Plus précisément, le contact étanche entre l'élément 2 et le conduit d'embout 30 est assuré par l'intermédiaire d'un joint métallique, que le rapprochement des pièces par actionnement du levier excentrique 60 vient comprimer entre les parties d'appui 9 et 39 de l'élément 2 et du conduit d'embout 30 pour étanchéifier la liaison. Dans ce cas, les parties d'appui 9 et 39 ne sont pas nécessairement des surfaces tronconiques ou sphériques.

Selon une autre variante non représentée, l'élément de raccord 2 comprend un profil de prise femelle, par exemple un taraudage, tandis que le corps d'embout 20 comprend un profil de prise mâle, par exemple un filetage.

Selon une autre variante non représentée, le conduit d'embout 30 n'est pas conformé comme un corps tubulaire monobloc, mais est constitué de plusieurs pièces assemblées entre elles de manière étanche.

Selon une autre variante non représentée, un système de soupape peut être disposé à l'intérieur du canal 8 de l'élément 2 et/ou du canal principal d'écoulement 38 défini par le conduit d'embout 30. Dans tous les cas, le corps 20 comprend une cavité intérieure sèche 24, traversante, isolée de la veine fluide, c'est-à-dire dans laquelle aucun fluide ne circule directement. Aucun fluide ne s'écoule dans la cavité intérieure sèche 24 du corps 20 et sur la surface extérieure du conduit 30 lorsque le fluide traverse le raccord 1. Autrement dit, le conduit 30 est différent d'une soupape.

Selon une variante particulière non représentée, le levier excentrique 60 comporte au moins une partie cylindrique qui est logée dans un alésage de l'organe pivot 50. Cette partie cylindrique et cet alésage sont centrés sur l'axe A1.

Selon une variante non représentée, le levier excentrique 60 comporte au moins un alésage qui reçoit une partie cylindrique appartenant à la bague bielle 70. Cet alésage et cette partie cylindrique sont centrés sur l'axe A2 et sont excentrés par rapport à l'axe A1.

Selon une autre variante non représentée, le levier excentrique 60 inclut des moyens de réglage de la position de chaque pion 69 sur le bras de levier 61 correspondant, afin de régler la course du levier 60 et donc les efforts de pression Fp au niveau des surfaces de contact 9 et 39. Par exemple, le pion 69 peut être vissé en différents emplacements le long d'une rainure ménagée dans le bras 61.

Selon une autre variante non représentée, l'élément de raccord 2 comprend un conduit 4, un corps qui s'étend suivant un axe longitudinal et qui est muni d'une surface radiale comportant un filetage complémentaire du filetage 25 du corps d'embout 20, ainsi qu'un mécanisme de verrouillage agencé dans le corps fileté de l'élément 2, par exemple à billes ou à bouton, tel que décrit dans la demande de brevet FR 11 59652. Dans ce cas, le corps fileté peut venir en prise avec le corps d'embout 20. Le conduit 4 peut être bloqué en position par rapport au corps fileté de l'élément 2 grâce au mécanisme de verrouillage rapide. Ce mécanisme de verrouillage est mobile au moins en configuration désaccouplée du raccord entre, d'une part, une position de blocage du conduit 4 introduit dans le corps de l'élément de raccord 2 par rapport au corps de l'élément de raccord 2, selon au moins une direction parallèle à l'axe longitudinal du corps et opposée au dispositif 10 et, d'autre part, une position où te mécanisme de verrouillage autorise le retrait du conduit 4 hors du corps de l'élément de raccord 2.

Selon une autre variante non représentée, le mécanisme 40 peut être conformé de manière différente, adaptée à la présente application. Par exemple, le levier 60 comprend un unique bras de levier 61, une unique partie excentrique 64 et un unique pion 69. Dans ce cas, l'organe pivot 50 comprend alors une unique partie latérale 52 logée dans ce bras 61 et le mécanisme 40 comprend une unique bague bielle 70 disposée autour de la partie excentrique 64 de ce bras 61. Toutefois, il est préférable que le mécanisme 40 soit symétrique par rapport au plan P1 pour optimiser la répartition des efforts, notamment lors de l'actionnement du levier 60. La construction d'un mécanisme 40 avec deux bras de levier 61, deux bagues bielles 70 et deux cylindres pivot 52 équilibre le mouvement longitudinal de l'organe pivot 50 dans le logement 80 du corps 20, pour éviter le coincement.

Selon une autre variante non représentée, l'organe pivot 50 et le conduit d'embout 30 sont une même pièce.

Quel que soit le mode de réalisation, les moyens de déplacement 40 comprennent au moins un organe pivot 50, un organe excentrique 60, un organe bielle 70 et un logement arrière 85 qui est ménagé dans le corps d'embout 20, définissant un premier diamètre d'articulation Φ1 entre l'organe pivot 50 et l'organe excentrique 60 autour d'un premier axe A1, un deuxième diamètre d'articulation Φ2 entre l'organe excentrique 60 et l'organe bielle 70 autour d'un deuxième axe A2, et un troisième diamètre d'articulation Φ3 entre l'organe bielle 70 et le logement arrière 85 autour d'un troisième axe A3. Les trois axes A1, A2 et A3 sont distincts et parallèles entre eux. La distance entre l'axe A1 et l'axe A2 est inférieure à la demi-somme du diamètre d'articulation Φ1 et du diamètre d'articulation Φ2 et la distance entre l'axe A2 et l'axe A3 est inférieure à la demi-somme du diamètre d'articulation Φ2 et du diamètre d'articulation Φ3. L'organe pivot 50 est mobile uniquement en translation suivant l'axe longitudinal X10 par rapport au corps d'embout 20 et est apte à repousser le conduit d'embout 30 suivant la direction avant D1. Entre la configuration déverrouillée et la configuration verrouillée des moyens de déplacement 40, l'organe excentrique 60 glisse par rapport à l'organe pivot 50 selon le premier diamètre d'articulation Φ1.

En outre, les caractéristiques techniques des différents modes de réalisation et variantes mentionnées ci-dessus peuvent être, en totalité ou pour certaines d'entre elles, combinées entre elles. Ainsi, le raccord et le dispositif de raccord selon l'invention peuvent être adaptés à une application particulière, notamment en termes de coût et de contraintes opérationnelles.

## Revendications

1. Dispositif de raccord (10), adapté pour transmettre des fluides sous pression, ce dispositif de raccord (10) étant configuré pour s'accoupler avec un élément de raccord (2) complémentaire, avec une première pièce (2) parmi le dispositif et l'élément de raccord qui est configurée comme un élément mâle adapté pour être relié à une première canalisation et une deuxième pièce (10) parmi le dispositif et l'élément de raccord qui est configurée comme un élément femelle adapté pour être relié à une deuxième canalisation, le dispositif de raccord (10) comprenant :
- un conduit d'embout (30) délimitant un canal interne (38) d'écoulement d'un fluide dans le dispositif de raccord (10) et comportant une surface d'appui (39) pour l'élément de raccord (2) ;
- un corps d'embout (20) comportant une surface filetée (25) d'engagement avec un corps (3) de l'élément de raccord (2) et une cavité intérieure (24) qui s'étend globalement suivant un axe longitudinal (X10) du dispositif de raccord (10) et qui est isolée du canal interne (38) d'écoulement du fluide en configuration accouplée ; et
- des moyens (40) de déplacement du conduit d'embout (30) dans la cavité (24) ducorps d'embout (20) le long de l'axe longitudinal (X10) selon une direction avant (D1) entre une configuration déverrouillée et une configuration verrouillée ;
**caractérisé en ce que** ces moyens de déplacement (40) comprennent au moins un organe pivot (50), un organe excentrique (60), un organe bielle (70) et un logement arrière (85) qui est ménagé dans le corps d'embout (20), définissant :
- un premier diamètre (Φ1) d'articulation entre l'organe pivot (50) et l'organe excentrique (60) autour d'un premier axe (A1),
- un deuxième diamètre (Φ2) d'articulation entre l'organe excentrique (60) et l'organe bielle (70) autour d'un deuxième axe (A2), et
- un troisième diamètre (Φ3) d'articulation entre l'organe bielle (70) et le logement arrière (85) autour d'un troisième axe (A3) ;
**en ce que** les premier, deuxième et troisième axes (A1, A2, A3) sont distincts et parallèles à une direction transversale à l'axe longitudinal (X10) ;
**en ce que** la distance entre le premier axe (A1) et le deuxième axe (A2) est inférieure à la demi-somme du premier diamètre (Φ1) et du deuxième diamètre (Φ2);
**en ce que** la distance entre le deuxième axe (A2) et le troisième axe (A3) est inférieure à la demi-somme du deuxième diamètre (Φ2) et du troisième diamètre (Φ3); et
**en ce que** l'organe pivot (50) est mobile uniquement en translation suivant l'axe longitudinal (X10) par rapport au corps (20) d'embout et est apte à repousser le conduit d'embout (30) suivant la direction avant (D1).

2. Dispositif de raccord (10) selon la revendication 1, **caractérisé en ce que** l'organe excentrique (60) comprend une première surface cylindrique (65) qui coopère avec l'organe pivot (50) pour former l'articulation de premier diamètre (Φ1) et une deuxième surface cylindrique (66) qui coopère avec l'organe bielle (70) pour former l'articulation de deuxième diamètre (Φ2), et **en ce que** la première surface cylindrique (65) entoure ou est entourée par la deuxième surface cylindrique (66) de l'organe excentrique (60).

3. Dispositif de raccord (10) selon l'une des revendications précédentes, **caractérisé en ce que** l'organe bielle (70) comprend une première surface cylindrique (72) qui coopère avec l'organe excentrique (60) pour former l'articulation de deuxième diamètre (Φ2) et une surface externe (73) incluant une deuxième surface cylindrique (75) qui coopère avec le logement arrière (85) pour former l'articulation de troisième diamètre (Φ3), et **en ce que** la surface externe (73) de l'organe bielle (70) entoure la première surface cylindrique (72) de l'organe bielle (70).

4. Dispositif de raccord (10) selon les revendications 2 et 3, **caractérisé en ce que** le logement arrière (85), la première surface cylindrique (72) et la deuxième surface cylindrique (75) de l'organe bielle (70), la première surface cylindrique (65) et la deuxième surface cylindrique (66) de l'organe excentrique (60) sont disposés au même niveau selon une direction parallèle aux premier, deuxième et troisième axes (A1, A2, A3).

5. Dispositif de raccord (10) selon l'une des revendications précédentes, **caractérisé en ce que** le premier axe (A1) et le troisième axe (A3) sont situés dans un plan (P2) sensiblement parallèle à l'axe longitudinal (X10) du dispositif de raccord (10), **en ce que** le deuxième axe (A2) est situé d'un côté du plan (P2) dans la configuration déverrouillée des moyens de déplacement (40), et **en ce que** le deuxième axe (A2) est situé de l'autre côté du plan (P2) dans la configuration verrouillée des moyens de déplacement (40).

6. Dispositif de raccord (10) selon l'une des revendications précédentes, **caractérisé en ce que** la distance entre le premier axe (A1) et le deuxième axe (A2) est inférieure à la distance entre le deuxième axe (A2) et le troisième axe (A3).

7. Dispositif de raccord (10) selon l'une des revendications précédentes, **caractérisé en ce que** :
- l'organe pivot (50) comprend au moins une partie cylindrique (52) centrée sur le premier axe (A1) ;
- l'organe excentrique (60) comprend un alésage (65) recevant la partie cylindrique (52) de l'organe pivot (50) pour former l'articulation de premier diamètre (Φ1) et une surface externe (66) entourant l'alésage (65) et centrée sur le deuxième axe (A2) ;
- l'organe bielle (70) comprend un alésage (72) recevant la surface externe (66) de l'organe excentrique (60) pour former l'articulation de deuxième diamètre (Φ2) et une surface externe (73) entourant l'alésage (72) ; et
- le logement arrière est formé d'un alésage (85) centré sur le troisième axe (A3) et apte à coopérer avec une surface cylindrique (75) de la surface externe (73) de l'organe bielle (70) pour former l'articulation de troisième diamètre (Φ3).

8. Dispositif de raccord (10) selon la revendication précédente, **caractérisé:**
- **en ce que** l'organe excentrique (60) forme un levier de manoeuvre des moyens de déplacement (40) entre la configuration déverrouillée et la configuration verrouillée et comprend deux bras de levier (61) situés de part et d'autre du corps d'embout (20), chaque bras de levier (61) coopérant avec l'organe pivot (50) ;
- et **en ce que** les moyens de déplacement (40) comprennent :
- deux organes bielles (70) coopérant chacun avec l'un des bras de levier (61) de l'organe excentrique (60), et
- deux logements arrière (85) débouchant à l'extérieur du corps d'embout (20) et coopérant chacun avec l'un des organes bielles (70).

9. Dispositif de raccord (10) selon la revendication précédente, **caractérisé en ce que** les deux bras de levier (61) sont reliés par un arbre (62) formant une poignée de manoeuvre, qui vient en butée contre le corps d'embout (20) dans la configuration verrouillée des moyens de déplacement (40).

10. Dispositif de raccord (10) selon l'une des revendications précédentes, **caractérisé en ce que** l'organe excentrique (60) comporte au moins une butée (69) venant en appui contre une surface (76) de l'organe bielle (70) dans la configuration déverrouillée des moyens de déplacement (40).

11. Dispositif de raccord (10) selon l'une des revendications précédentes, **caractérisé en ce qu'**il comprend également des moyens (100) de rappel élastique des moyens de déplacement (40) en configuration déverrouillée.

12. Raccord (1) adapté pour transmettre des fluides sous pression, **caractérisé en ce qu'**il comprend :
- un dispositif de raccord (10) selon l'une des revendications précédentes,
- ainsi qu'un élément de raccord (2) complémentaire qui est apte à être couplé au dispositif de raccord (10) et qui comprend un conduit (4) définissant une surface d'appui (9) complémentaire de la surface d'appui (39) du dispositif de raccord (10).
et **en ce que** la surface d'appui (9) de l'élément de raccord (2) complémentaire et la surface d'appui (39) du dispositif de raccord (10) sont en contact tronc de cône sur tronc de cône ou en contact portion de sphère sur tronc de cône pour former la liaison étanche entre le conduit d'embout (20) et le conduit (4).

13. Raccord (1) selon la revendication précédente, **caractérisé en ce que** l'élément de raccord (2) complémentaire comprend un mécanisme de verrouillage mobile entre, d'une part, une position de blocage du conduit (4) de l'élément de raccord (2) complémentaire introduit dans un corps de l'élément de raccord (2) complémentaire par rapport audit corps de l'élément de raccord (2) complémentaire, selon au moins une direction parallèle à un axe longitudinal de l'élément de raccord (2) complémentaire et opposée au dispositif de raccord (10) et, d'autre part, une position où le mécanisme de verrouillage autorise le retrait du conduit (4) de l'élément de raccord (2) hors du corps de l'élément de raccord (2) complémentaire.

## Patentansprüche

1. Anschlussvorrichtung (10), geeignet zum Weiterleiten von unter Druck stehenden Fluiden, wobei diese Anschlussvorrichtung (10) ausgebildet ist, mit einem komplementären Anschlusselement (2) gekoppelt zu werden, wobei ein erstes Teil (2) der Teile Vorrichtung und Anschlusselement, das wie ein Einsteckelement ausgebildet ist, das geeignet ist, mit einer ersten Leitung verbunden zu werden, und ein zweites Teil (10) der Teile Vorrichtung und Anschlusselement, das als Aufnahmeelement ausgebildet ist und geeignet ist, mit einer zweiten Leitung verbunden zu werden, vorgesehen sind, wobei die Anschlussvorrichtung (10) umfasst:
- ein Ansatzrohr (30), das einen Innenkanal (38) für die Strömung eines Fluids in der Anschlussvorrichtung (10) begrenzt und eine Anlagefläche (39) für das Anschlusselement (2) aufweist;
- einen Ansatzkörper (20), der eine Gewindefläche (25) für den Eingriff mit einem Körper (3) des Anschlusselements (2) und einen Innenhohlraum (24) aufweist, der sich im Wesentlichen gemäß einer Längsachse (X10) der Anschlussvorrichtung (10) erstreckt und der im gekoppelten Zustand zu dem Innenkanal (38) für die Strömung des Fluids isoliert ist; und
- Mittel (40) zum Verschieben des Ansatzrohrs (30) in dem Hohlraum (24) des Ansatzkörpers (20) entlang der Längsachse (X10) gemäß einer Vorwärtsrichtung (D1) zwischen einer entriegelten Stellung und einer verriegelten Stellung;
**dadurch gekennzeichnet, dass** die Mittel (40) zum Verschieben mindestens ein Schwenkorgan (50), ein exzentrisches Organ (60), ein Zwischenorgan (70) und einen hinteren Aufnahmeraum (85), der in dem Ansatzkörper (20) eingearbeitet ist, umfassen, wobei definiert sind:
- ein erster Durchmesser (Φ1) der Schwenkbarkeit zwischen dem Schwenkorgan (50) und dem exzentrischen Organ (30) um eine erste Achse (A1),
- ein zweiter Durchmesser (Φ2) der Schwenkbarkeit zwischen dem exzentrischen Organ (60) und dem Zwischenorgan (70) um eine zweite Achse (A2), und
- ein dritter Durchmesser (Φ3) der Schwenkbarkeit zwischen dem Zwischenorgan (70) und dem hinteren Aufnahmeraum (85) um eine dritte Achse (A3);
dass die erste, zweite und dritte Achse (A1, A2, A3) unterschiedlich und parallel zu einer Richtung quer zur Längsachse (X10) sind;
dass der Abstand zwischen der ersten Achse (A1) und der zweiten Achse (A2) kleiner ist als die halbe Summe des ersten Durchmessers (Φ1) und des zweiten Durchmessers (Φ2);
dass der Abstand zwischen der zweiten Achse (A2) und der dritten Achse (A3) kleiner als die halbe Summe des zweiten Durchmessers (Φ2) und des dritten Durchmessers (Φ3) ist; und
dass das Schwenkorgan (50) nur translatorisch gemäß der Längsachse (X10) in Bezug auf den Ansatzkörper (20) beweglich ist und geeignet ist, das Ansatzrohr (30) gemäß der Vorwärtsrichtung (D1) zu verschieben.

2. Anschlussvorrichtung (10) nach Anspruch 1, **dadurch gekennzeichnet, dass** das exzentrische Organ (60) eine erste zylindrische Oberfläche (65), die mit dem Schwenkorgan (50) zusammenarbeitet, um die Schwenkbarkeit mit erstem Durchmesser (Φ1) zu bilden, und eine zweite zylindrische Oberfläche (66) aufweist, die mit dem Zwischenorgan (70) zusammenarbeitet, um die Schwenkbarkeit mit zweitem Durchmesser (Φ2) zu bilden, und dass die erste zylindrische Oberfläche (65) die zweite zylindrische Oberfläche (66) des exzentrischen Organs (60) umgibt oder von dieser umgeben ist.

3. Anschlussvorrichtung (10) nach einem der vorhergehenden Ansprüche, **dadurch gekennzeichnet, dass** das Zwischenorgan (70) eine erste zylindrische Oberfläche (72), die mit dem exzentrischen Organ (60) zur Bildung der Schwenkbarkeit mit zweitem Durchmesser (Φ2) zusammenarbeitet, und eine Außenfläche (73) umfasst, die eine zweite zylindrische Oberfläche (75) einschließt, die mit dem hinteren Aufnahmeraum (85) zusammenarbeitet, um die Schwenkbarkeit mit drittem Durchmesser (Φ3) zu bilden, und dass die Außenfläche (73) des Zwischenorgans (70) die erste zylindrische Oberfläche (72) des Zwischenorgans (70) umgibt.

4. Anschlussvorrichtung (10) nach den Ansprüchen 2 und 3, **dadurch gekennzeichnet, dass** der hintere Aufnahmeraum (85), die erste zylindrische Oberfläche (72) und die zweite zylindrische Oberfläche (75) des Zwischenorgans (70), die erste zylindrische Oberfläche (65) und die zweite zylindrische Oberfläche (66) des exzentrischen Organs (60) auf gleichem Niveau gemäß einer Richtung parallel zur ersten, zweiten und dritten Achse (A1, A2, A3) angeordnet sind.

5. Anschlussvorrichtung (10) nach einem der vorhergehenden Ansprüche, **dadurch gekennzeichnet, dass** die erste Achse (A1) und die dritte Achse (A3) in einer im Wesentlichen parallel zur Längsachse (X10) der Anschlussvorrichtung (10) liegenden Ebene (P2) angeordnet sind, dass die zweite Achse (A2) an einer Seite der Ebene (P2) in der entriegelten Stellung der Mittel (40) zum Verschieben liegt und dass die zweite Achse (A2) an der anderen Seite der Ebene (P2) in der verriegelten Stellung der Mittel (40) zum Verschieben liegt.

6. Anschlussvorrichtung (10) nach einem der vorhergehenden Ansprüche, **dadurch gekennzeichnet, dass** der Abstand zwischen der ersten Achse (A1) und der zweiten Achse (A2) kleiner als der Abstand zwischen der zweiten Achse (A2) und der dritten Achse (A3) ist.

7. Anschlussvorrichtung (10) nach einem der vorhergehenden Ansprüche, **dadurch gekennzeichnet, dass**:
- das Schwenkorgan (50) mindestens einen zylindrischen Bereich (52) umfasst, der auf die erste Achse (A1) zentriert ist;
- das exzentrische Organ (60) eine Bohrung (65), die den zylindrischen Bereich (52) des Schwenkorgans (50) zur Bildung der Schwenkbarkeit mit erstem Durchmesser (Φ1) aufnimmt, und eine Außenfläche (66), die die Bohrung (65) umgibt und auf die zweite Achse (A2) zentriert ist, umfasst;
- das Zwischenorgan (70) eine Bohrung (72), die die Außenfläche (66) des exzentrischen Organs (60) zur Bildung der Schwenkbarkeit mit zweitem Durchmesser (Φ2) aufnimmt, und eine Außenfläche (73), die die Bohrung (72) umgibt, umfasst; und
- der hintere Aufnahmeraum von einer Bohrung (85) gebildet wird, die auf die dritte Achse (A3) zentriert ist und geeignet ist, mit einer zylindrischen Oberfläche (75) der Außenfläche (73) des Zwischenorgans (70) zur Bildung der Schwenkbarkeit mit drittem Durchmesser (Φ3) zusammenzuarbeiten.

8. Anschlussvorrichtung (10) nach dem vorhergehenden Anspruch, **dadurch gekennzeichnet:**
- **dass** das exzentrische Organ (60) einen Betätigungshebel für die Mittel zum Verschieben (40) zwischen der entriegelten Stellung und der verriegelten Stellung bildet und zwei Hebelarme (61) umfasst, die beidseitig des Ansatzkörpers (20) liegen, wobei jeder Hebelarm (61) mit dem Schwenkorgan (50) zusammenarbeitet;
- und **dass** die Mittel (40) zum Verschieben umfassen:
- zwei Zwischenorgane (70), die jeweils mit einem der Hebelarme (61) des exzentrischen Organs (60) zusammenarbeiten, und
- zwei hintere Aufnahmeräume (85), die sich nach außen in Bezug auf den Ansatzkörper (20) öffnen und jeweils mit einem der Zwischenorgane (70) zusammenarbeiten.

9. Anschlussvorrichtung (10) nach dem vorhergehenden Anspruch, **dadurch gekennzeichnet, dass** die zwei Hebelarme (61) durch eine Achse (62) verbunden sind, die einen Handhabungsgriff bildet, der in der verriegelten Stellung der Mittel (40) zum Verschieben gegen den Ansatzkörper (20) anschlägt.

10. Anschlussvorrichtung (10) nach einem der vorhergehenden Ansprüche, **dadurch gekennzeichnet, dass** das exzentrische Organ (60) mindestens einen Anschlag (69) aufweist, der in Anlage gegen eine Fläche (76) des Zwischenorgans (70) in der entriegelten Stellung der Mittel (40) zum Verschieben kommt.

11. Anschlussvorrichtung (10) nach einem der vorhergehenden Ansprüche, **dadurch gekennzeichnet, dass** sie gleichfalls Mittel (100) zur elastischen Rückstellung der Mittel (40) zum Verschieben in der entriegelten Stellung umfasst.

12. Anschluss (1), geeignet zur Übertragung von unter Druck stehenden Fluiden, **dadurch gekennzeichnet, dass** er umfasst:
- eine Anschlussvorrichtung (10) nach einem der vorhergehenden Ansprüche,
- sowie ein komplementäres Anschlusselement (2), das geeignet ist, mit der Anschlussvorrichtung (10) gekoppelt zu werden und das einen Kanal (4) umfasst, der eine zur Anlagefläche (39) der Anschlussvorrichtung (10) komplementäre Anlagefläche (9) begrenzt,
und dass die Anlagefläche (9) des komplementären Anschlusselements (2) und die Anlagefläche (39) der Anschlussfläche (10) in einem zueinander kegelstumpfförmigen Kontakt oder einem Kugelabschnitt-Kegelstumpf-Kontakt sind, um die dichte Verbindung zwischen dem Ansatzrohr (20) und dem Kanal (4) zu bilden.

13. Anschluss (1) nach dem vorhergehenden Anspruch, **dadurch gekennzeichnet, dass** das komplementäre Anschlusselement (2) einen Verriegelungsmechanismus aufweist, der zwischen einer Position des Absperrens des Kanals (4) des komplementäre Anschlusselements (2), der in einen Körper des komplementären Anschlusselements (2) in Bezug auf diesen Körper des komplementären Anschlusselements (2) gemäß mindestens einer Richtung parallel zu einer Längsachse des komplementären Anschlusselements (2) und entgegengesetzt zur Anschlussvorrichtung (10)eingeführt ist, einerseits und einer Position, in der der Verriegelungsmechanismus das Zurückziehen des Kanals (4) des Anschlusselements (2) aus dem Körper des komplementären Anschlusselements (2) gestattet, andererseits bewegbar ist.

## Claims

1. A connecting device (10), adapted for transmitting pressurized fluids, this connecting device (10) being configured to be coupled with a complementary connecting element (2), with a first part (2) among the device and the connecting element that is configured to be a male element adapted for being connected to a first line, and a second part (10) among the device and the connector element that is configured to be a female element adapted for being connected to a second line, the connecting device (10) comprising:
- a pipe end (30) delimiting an inner flow channel (38) for a fluid flow in the connecting device (10) and including a bearing surface (39) for the connector element (2);
- an end body (20) including a threaded surface (25) for engaging with a body (3) of the connector element (2) and an inner cavity (24) that extends globally along a longitudinal axis (X10) of the connecting device (10) and that is isolated from the inner flow channel (38) in the coupled configuration; and
- displacement means (40) for moving the pipe end (30) in the cavity (24) of the end body (20) along the longitudinal axis (X10) in a forward direction (D1) between an unlocked configuration and a locked configuration.
wherein the displacement means (40) comprise at least one pivot member (50), one off-centered member (60), one connecting rod member (70) and one rear housing (85) that is formed in the end body (20), defining:
- a first articulation diameter (Φ1) between the pivot member (50) and the off-centered member (60) around a first axis (A1),
- a second articulation diameter (Φ2) between the off-centered member (60) and the connecting rod member (70) around a second axis (A2), and
- a third articulation diameter (Φ3) between the connecting rod member (70) and the rear housing (85) around a third axis (A3);
wherein the first, second and third axes (A1, A2, A3) are separate and parallel to a direction transverse to the longitudinal axis (X10);
wherein the distance between the first axis (A1) and the second axis (A2) is smaller than the half-sum of the first diameter (Φ1) and the second diameter (Φ2);
wherein the distance between the second axis (A2) and the third axis (A3) is smaller than the half-sum of the second diameter (Φ2) and the third diameter (Φ3); and wherein the pivot member (50) is movable only in translation along the longitudinal axis (X10) relative to the end body (20) and is capable of pushing the pipe end (30) back in the forward direction (D1).

2. The connecting device (10) according to claim 1, wherein the off-centered member (60) comprises a first cylindrical surface (65) that cooperates with the pivot member (50) to form the articulation with a first diameter (Φ1) and a second cylindrical surface (66) that cooperates with the connecting rod member (70) to form the articulation with a second diameter (Φ2), and wherein the first cylindrical surface (65) surrounds or is surrounded by the second cylindrical surface (66) of the off-centered member (60).

3. The connecting device (10) according to claim 1, wherein the connecting rod member (70) comprises a first cylindrical surface (72) that cooperates with the off-centered member (60) to form the articulation with a second diameter (Φ2) and an outer surface (73) including a second cylindrical surface (75) that cooperates with the rear housing (85) to form the articulation with a third diameter (Φ3), and wherein the outer surface (73) of the connecting rod member (70) surrounds the first cylindrical surface (72) of the connecting rod member (70).

4. The connecting device (10) according to claim 3, wherein the off-centered member (60) comprises a first cylindrical surface (65) that cooperates with the pivot member (50) to form the articulation with a first diameter (Φ1) and a second cylindrical surface (66) that cooperates with the connecting rod member (70) to form the articulation with a second diameter (Φ2), wherein the first cylindrical surface (65) surrounds or is surrounded by the second cylindrical surface (66) of the off-centered member (60), and wherein the rear housing (85), the first cylindrical surface (72) and the second cylindrical surface (75) of the connecting rod (70), the first cylindrical surface (65) and the second cylindrical surface (66) of the off-centered member (60) are positioned at the same level in a direction parallel to the first, second and third axes (A1, A2, A3).

5. The connecting device (10) according to claim 1, wherein the first axis (A1) and the third axis (A3) are situated in a plane (P2) substantially parallel to the longitudinal axis (X10) of the connecting device (10), wherein the second axis (A2) is situated on one side of the plane (P2) in the unlocked configuration of the displacement means (40), and wherein the second axis (A2) is situated on the other side of the plane (P2) in the locked configuration of the displacement means (40).

6. The connecting device (10) according to claim 1, wherein the distance between the first axis (A1) and the second axis (A2) is smaller than the distance between the second axis (A2) and third axis (A3).

7. The connecting device (10) according to claim 1, wherein:
- the pivot member (50) comprises at least one cylindrical part (52) centered on the first axis (A1);
- the off-centered member (60) comprises a bore (65) receiving the cylindrical part (52) of the pivot member (50) to form the articulation with a first diameter (Φ1) and an outer surface (66) surrounding the bore (65) and centered on the second axis (A2);
- the connecting rod member (70) comprises a bore (72) receiving the outer surface (66) of the off-centered member (60) to form the articulation with a second diameter (Φ2) and an outer surface (73) surrounding the bore (72); and
- the rear housing is formed by a bore (85) centered on the third axis (A3) and capable of cooperating with a cylindrical surface (75) of the outer surface (73) of the connecting rod member (70) to form the articulation with a third diameter (Φ3).

8. The connecting device (10) according to claim 7, wherein the off-centered member (60) forms a handling lever for the displacement means (40) between the unlocked configuration and locked configuration and comprises two lever arms (61) situated on either side of the end body (20), each lever arm (61) cooperating with the pivot member (50), and wherein the displacement means (40) comprise:
- two connecting rod members (70) each cooperating with one of the lever arms (61) of the off-centered member (60), and
- two rear housings (85) emerging outside the end body (20) and each cooperating with one of the connecting rod members (70).

9. The connecting device (10) according to claim 8, wherein the two lever arms (61) are connected by a shaft (62) forming a maneuvering handle, which abuts against the end body (20) in the locked configuration of the displacement means (40).

10. The connecting device (10) according to claim 1, wherein the off-centered member (60) includes at least one stop (69) bearing against a surface (76) of the connecting rod member (70) in the unlocked configuration of the displacement means (40).

11. The connecting device (10) according to claim 1, wherein it comprises elastic return means (100) for returning the displacement means (40) to the unlocked configuration.

12. A connector (1) adapted for transmitting pressurized fluids, wherein it comprises
- a connecting device (10) according to claim 1,
- as well as a complementary connector element (2) that is capable of being coupled to the connecting device (10) and that comprises a pipe (4) defining a bearing surface (9) complementary to the bearing surface (39) of the connecting device (10),
and wherein the bearing surface (9) of the complementary connector element (2) and the bearing surface (39) of the connecting device (10) are in cone trunk-on-cone trunk contact or in sphere portion-on-cone trunk contact to form the connection between the pipe end (20) and the pipe (4).

13. The connector (1) according to claim 12, wherein the complementary connector element (2) comprises a locking mechanism movable between a position locking the pipe (4) of the complementary connector element (2) inserted in a body of the complementary connector element (2) relative to said body of the complementary connector element (2), in at least one direction parallel to a longitudinal axis of the complementary connector element (2) and opposite the connecting device (10), on the one hand, and a position where the locking mechanism allows the pipe (4) of the connector element (2) to be removed outside the body of the complementary connector element (2), on the other hand.
